# EUROPÄISCHE PATENTSCHRIFT

(11) **EP 0 968 044 B1**
(45) Veröffentlichungstag und Bekanntmachung des Hinweises auf die Patenterteilung: **20.12.2000**
(21) Anmeldenummer: 98912301.3
(22) Anmeldetag: 13.02.1998
(51) Int. Cl.: B01D 53/50

(54) **VERFAHREN ZUR UNTERDRÜCKUNG DER BILDUNG VON SCHWEFELSAÜREAEROSOLEN IN ABGASREINIGUNGSANLAGEN**
METHOD FOR PREVENTING THE FORMATION OF SULFURIC ACID AEROSOLS IN FLUE GAS CLEANING PLANTS
PROCEDE POUR EMPECHER LA FORMATION D'AEROSOLS D'ACIDE SULFURIQUE DANS LES INSTALLATIONS D'EPURATION DE GAZ DE COMBUSTION

(30) Priorität: 15.02.1997 DE 19705897
(43) Veröffentlichungstag der Anmeldung: 05.01.2000
(73) Patentinhaber: PreussenElektra Engineering GmbH, 45896 Gelsenkirchen (DE)
(72) Erfinder: DIECKMANN, Hans-Joachim, D-44625 Herne (DE); GUTBERLET, Heinz, D-46348 Raesfeld (DE)
(74) Vertreter: Cohausz & Florack Patentanwälte
(86) Internationale Anmeldenummer: EP9800801
(87) Internationale Veröffentlichungsnummer: WO9835745

(56) Entgegenhaltungen:
- WO-A-94/21356
- DE-A- 3 303 475
- US-A- 4 340 572

## Beschreibung

Zur Abscheidung von Schwefeldioxid und Schwefeltrioxid aus Abgasen, die bei der Verbrennung fossiler Brennstoffe oder von Müll in Kraftwerken oder Verbrennungsanlagen anfallen, wird das Abgas entschwefelt. Durch die Abgasentschwefelung wird die Emission dieser Substanzen drastisch verringert, um die Belastung der Umwelt mit diesen Stoffen zu vermeiden.

Die größte Bedeutung als Abgasentschwefelungsverfahren haben Waschverfahren mit Suspensionen von Kalkhydrat oder Kalkstein. Bei diesen sogenannten Naßverfahren werden die Abgase unter Abkühlung in Sprühtürmen mit der verdüsten Waschsuspension behandelt, wobei ein Entschwefelungsgrad von über 95% erreicht werden kann.

Neben Schwefeldioxid enthalten Verbrennungsabgase Schwefel auch in Form von gasförmiger Schwefelsäure, die bei Abgastemperaturen oberhalb des Taupunkts der Schwefelsäure (etwa 130°C) gasförmig vorliegt.

Bei der schnellen Abkühlung des Abgases in den Gaswäschern auf Temperaturen um 45 bis 65°C bilden sich Schwefelsäureaerosole. Bei Schwefelsäureaerosolen handelt es sich um feinste Tröpfchen hochkonzentrierter Schwefelsäure, die weder im Wäscher noch in nachgeschalteten Tröpfchenabscheidern abgeschieden werden. Somit wird den nachgeschalteten Stufen der Abgasreinigungsanlage flüssige Schwefelsäure zugeführt, die ohne großen Aufwand nicht vollständig abgetrennt werden kann.

Schwefelsäureaerosole führen zu Emissions- und Korrosionsproblemen. Korrosionsprobleme ergeben sich einerseits durch Säureangriff auf Kanäle und Aggregate in den Reingaswegen hinter den Rauchgaswäschern vor dem Kamin. Andererseits traten in der Vergangenheit Probleme in der Umgebung von Kohlekraftwerken durch die Immission saurer Partikel auf.

Aus der DE 41 25 214 A1 ist es grundsätzlich bekannt, Gasgemische vor der Gaswäsche in einer Waschkolonne einer Vorbedüsung mit Wasser (Quenchung) zu unterziehen. In den bekannten Verfahren erfolgt allerdings die bereits zuvor angesprochene schnelle Temperaturverringerung, die mit einer Schwefelsäureaerosolbildung einhergeht.

Die WO 94/21356 A1 beschreibt ein Verfahren zur Reinigung von heißem Gas und gegebenenfalls zur Rückgewinnung der in dem heißen Gas enthaltenen Energie, wobei das Gas in einer ersten Stufe durch Sättigung mit Wasser gekühlt wird und feinverteiltes Kühlwasser dem Gas in einer zweiten Stufe zur Kühlung des Gases auf 5 bis 20°C zugesetzt wird. Darauf kondensiert der im Gas vorhandene Dampf und entzieht dem Gas darin enthaltene Verunreinigungen. Anschließend wird das Gas abgelassen und das erwärmte Wasser durch Wärmeaustausch gekühlt. Dieses Verfahren widmet sich jedoch nicht den zuvor beschriebenen Problemen bei der Bildung von Schwefelsäureaaerosolen.

Der Erfindung liegt somit die Aufgabe zugrunde, die Schwefelsäureaerosolbildung in Abgasreinigungsanlagen von Kraftwerken und Verbrennungsanlagen so weit wie möglich zu verringern oder zu vermeiden.

Gelöst wird diese Aufgabe durch ein Verfahren zur Unterdrückung der Bildung von Schwefelsäureaerosolen in Abgasreinigungsanlagen, in dem Abgas in der Abgasreinigungsanlage eines Kraftwerks oder einer Verbrennungsanlage einer Vorbedüsung mit Wasser derart unterzogen wird, daß eine Abkühlung des Verbrennungsabgases auf eine Temperatur über dem Taupunkt der Schwefelsäure erfolgt. Die Abkühlung muß also derart erfolgen, daß der Taupunkt der Schwefelsäure im Verbrennungsabgas nicht unterschritten wird.

Beim Einsatz schwefelhaltiger Brennstoffe liegt die Konzentration gasförmiger Schwefelsäure im Abgas bei bis zu 50mg/m³. Gemäß einer bevorzugten Ausführungsform der Erfindung erfolgt bei der Vorbedüsung eine Abkühlung des Abgases auf 110 bis 150°C, gemäß einer besonders bevorzugten Ausführungsform auf 120 bis 140°C.

Die Vorbedüsung mit Wasser erfolgt nach dem Austreten des Abgases aus Staubabscheidern und vor dem Eintritt desselben in einen Gaswäscher. Das Abgas tritt beispielsweise in den Wäscher mit einer Temperatur größer als 150°C ein. Die Temperatur des Abgases kann je nach Kraftwerk- oder Verbrennungsanlage variieren und bis zu 500°C oder mehr betragen.

Durch das erfindungsgemäße Verfahren erfolgt die Abkühlung nicht spontan über einen großen Temperaturgradienten auf beispielweise eine Waschflüssigkeitstemperatur von 45 bis 65°C wie es in bekannten Anlagen der Fall ist. Vielmehr wird durch die Vorbedüsung ein kleinerer Temperaturgradient zur Abkühlung des Abgases eingestellt und eine Vorabsorption der noch gasförmigen Schwefelsäure durch Wasser bewirkt. Die gasförmige Schwefelsäure wird somit vor dem Unterschreiten des Taupunkts derselben größtenteils durch Wasser absorbiert.

Gemäß einer bevorzugten Ausführungsform des erfindungsgemäßen Verfahrens wird Abgas nach Ausströmen aus den Elektrofiltern und vor Eintritt in den Wäscher (Absorber) in einen Vorwäscher (Kühler) geleitet und durch direkt vor dem Eintritt des Abgasrohrs in den Vorwäscher angeordnete Düsen mit Wasser vorbedüst. Gemäß einer weiteren bevorzugten Ausführungsform der Erfindung erfolgt die Vorbedüsung des Abgases vor dem Eintritt in einen Wärmetauscher, der vor den Wäscher geschaltet ist.

Die Absorption der Schwefelsäure erfolgt also solange diese noch gasförmig ist, wodurch die Bildung von tröpfchenförmiger Schwefelsäure (Aerosol) im Wäscher oder Vorwäscher signifikant verringert oder auch vermieden werden kann. Ein Mehrverbrauch an Prozeßwasser durch die erfindungsgemäße Vorbedüsung ergibt sich nicht.

Die zur Vorbedüsung eingedüste Wassermenge kann so bemessen sein, daß beim Verdampfen eines Teils des Wassers die Abkühlung des Abgases (Rauchgas) nur bis in die Nähe oder kurz oberhalb des Taupunkts der Schwefelsäure erfolgt. Die eingedüste Wassermenge kann beispielsweise 0,01 bis 0,02 l/m³ betragen. Die erfindungsgemäß zur Vorbedüsung eingesetzte Wassermenge liegt damit um den Faktor 1000 unter der Wassermenge, die nach bekannten Verfahren in Vorwäschern mit dem Abgas in Kontakt gebracht werden.

Zur Gewährleistung eines hohen Wirkungsgrads wird Wasser, vorzugsweise an mehreren Stellen entgegen der Abgasströmungsrichtung versprüht. Zur Gewährleistung einer hohen Effizienz bei der Abscheidung gasförmiger Schwefelsäure werden ausreichend Tröpfchen erzeugt, daß der gesamte Querschnitt des Rauchgaskanals abgedeckt ist, um einen Rauchgas-Bypass zu verhindern. Die Tröpfchendichte kann insbesondere durch die Anzahl und die Anordnung der Düsen wie auch durch den Düsendruck gesteuert werden. Es ist selbstverständlich, daß die Anzahl und gegebenenfalls die Anordnung der Düsen vom Durchmesser und der Form der das Abgas führenden Einrichtung abhängig ist. Zur Vorbedüsung oder Quenchung kann Prozeßwasser aus der Kraftwerksanlage oder Verbrennungsanlage versprüht werden.

Das Tröpfchenspektrum wird so gewählt, daß die versprühte Flüssigkeit einerseits genügend Oberfläche für die Absorption der gasförmigen Schwefelsäure bietet; andererseits ist die Tröpfchengröße so eingestellt, daß die Tropfen nicht zu fein sind, da sonst die gesamte Wassermenge verdampfen würde.

Ob optimale Vorbedüsungsbedingungen eingestellt worden sind, läßt sich durch Ermittlung der Schwefelsäure in den sogenannten Reingaswegen feststellen.

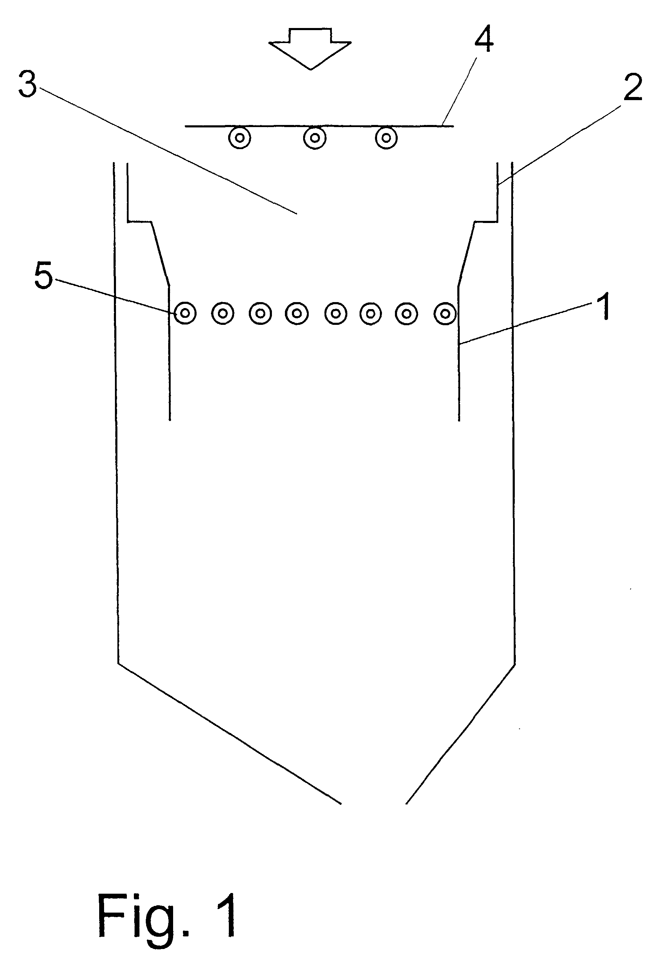

Fig. 1 zeigt eine stark vereinfachte Darstellung eines Venturiwäschers 1. In der abgasführenden Leitung 2, also vor der Gaseintrittsöffnung 3 des Wäschers, sind Düsen 4 angeordnet, durch die Abgas mit Wasser zur Absorption gasförmiger Schwefelsäure bedüst wird (Gasvorbedüsung). Die Hauptbedüsung mit einer wässrigen Suspension von Kalkhydrat zur Fällung des Schwefels als Calciumsulfat-Dihydrat erfolgt durch die im Wäscher angeordneten Düsen 5.

Zum Nachweis der Wirksamkeit des erfindungsgemäßen Verfahrens sind Untersuchungen von gas- und aerosolförmiger Schwefelsäure im Rauchgas vor und hinter der REA-Bahn mit und ohne Einsatz einer Vorbedüsung im Vorwäscher durchgeführt worden. Um einen ausreichenden Schwefelsäuregehalt im Rohgas vor der Rauchgasentschwefelung zur Absicherung der Meßergebnisse einzustellen, wurde die Bekalkung der Kohle in den Kesselanlagen im Versuchszeitraum eingestellt, wodurch als Folge der ansteigenden SO₂-Kesselkonversionsraten eine Erhöhung der gasförmigen SO₃-Konzentration von 1 bis 2 mg/m³ auf 12 bis 15 mg/m³ SO₃ (i.N., tr., 5 % O₂) im Rohgas vor der Rauchgasentschwefelung erreicht werden konnte.

Zur Messung des Schwefelsäuregehalts wird hinter dem Tröpfchenabscheidern eine Abgasprobe mit einem auf die Temperatur des Abgases beheizten Saugstutzen entnommen, die darin möglicherweise noch enthaltene Schwefelsäure auf einer Folie abgeschieden und nach Aufnahme der abgeschiedenen Schwefelsäure mit Wasser eine titrimetische Bestimmung der Schwefelsäure vorgenommen.

Die Ergebnisse sind in den Abbildungen 1 und 2 wiedergegeben, wobei im Falle der Ergebnisse der Abbildung 1 die erfindungsgemäße Vorbedüsung des Rauchgases erfolgt, im Falle der Ergebnisse der Abbildung 2 wurde keine Vorbedüsung vorgenommen.

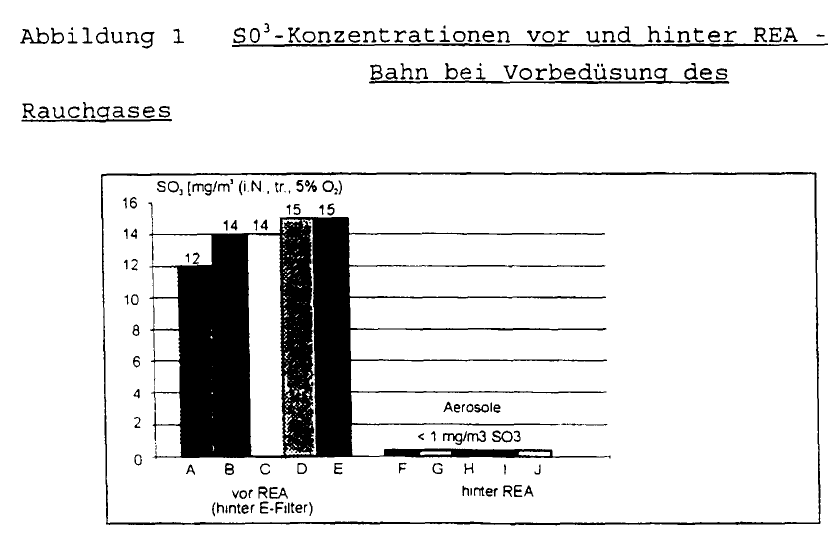

Die Buchstaben A bis J an der Abzisse geben einstündige Zeiträume mit einer halbstündigen Unterbrechung an während der Versuch durchgeführt wurde.

Im Versuchszeitraum lagen Konzentrationen gasförmigen Schwefeltrioxids im Rohgas hinter dem Elektrofilter und vor der Rauchgasentschwefelung (Rauchgastemperatur 134 - 136°C) von 12 bis 15 mg/m³ (i.N., tr., 5 % O₂) vor. Zeitgleich sind im Reingas hinter der Rauchgasentschwefelung (Temperaturen zwischen 72 und 75°C) Schwefelsäure in Aerosolform unterhalb der Bestimmungsgrenze von 1 mg/m³SO₃ nachgewiesen worden. Zur Absicherung der Messwerte wurde desweiteren ebenfalls zeitgleich gasförmiges SO₃ im Bereich eines zweiten Wärmetauschers hinter der Rauchgasentschwefelung bei Rauchgastemperaturen von 138 bis 142°C bestimmt. Durch die erfindungsgemäße Vorbedüsung mit Wasser wurden ausschließlich SO₃-Konzentrationen von < 1 mg/m³ (i.N., tr., 5 % O₂) ermittelt.

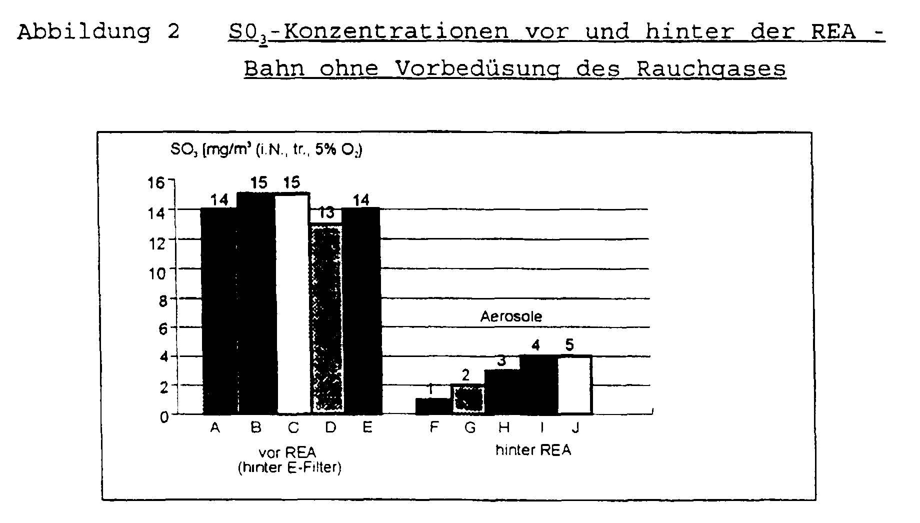

Für die Buchstaben A bis J gilt dieselbe Erläuterung wie bei Abbildung 1.

Im Versuchszeitraum ist gasförmiges SO₃ im Rohgas hinter dem Elektrofilter und vor der Rauchgasentschwefelung mit einer Konzentration von 13 bis 15 mg/m³ (i.N., tr., 5 % O₂) erfaßt worden. Zeitgleich lagen im Rauchgas hinter der Rauchgasentschwefelung nach einem ersten und vor einem zweiten Wärmetauscher Schwefelsäure in Aerosolform in einer Konzentration von 3 bis 4 mg/m³ SO₃ (i.N., tr., 5 % O₂) vor. Zur Absicherung der Meßergebnisse wurden ebenfalls zeitgleich Konzentrationen gasförmigen Schwefeltrioxids im Bereich eines zweiten Wärmetauschers hinter der Rauchgasentschwefelung bestimmt. Unter stationären betrieblichen Randbedingungen wurden korrelierend zu den Aerosolmeßwerten Konzentrationen gasförmigen Schwefeltrioxids von 3 bis 5 mg/m³ (i.N., tr., 5 % O₂) nachgewiesen. Die Meßergebnisse zeigen, daß 30 bis 40 % der in den REA-Wäscher eingetragenen gasförmigen Schwefelsäure in aerosolförmige Schwefelsäure überführt wird, wenn keine Vorbedüsung des Rauchgases erfolgt.

Die Versuchsergebnisse lassen eindeutig erkennen, daß die Vorbedüsung der Rauchgase im Vorwäscher die Schwefelsäure-Aerosolbildung signifikant minimiert. Es konnte festgestellt werden, daß der Materialzustand der Wärmetauscher nach Inbetriebnahme der Rauchgasvorbedüsung sich bezüglich der Säurekorrosion deutlich verbessert hat. Die massiven Korrosionsvorgänge an den Wärmetauschern, die nach der Inbetriebnahme der Rauchgasreinigungsanlage beobachtet wurden, standen in direktem Zusammenhang mit dem H₂SO₄-Aerosolbelastungen der Reingasströme hinter den REA-Wäschern.

## Patentansprüche

1. Verfahren zur Unterdrückung der Bildung von Schwefelsäureaerosolen in Abgasreinigungsanlagen von Kraftwerk- und Verbrennungsanlagen, **dadurch gekennzeichnet,** daß man das Abgas in der Abgasreinigungsanlage einer Vorbedüsung mit Wasser derart unterzieht, daß der Taupunkt der Schwefelsäure im Abgas nicht unterschritten wird.

2. Verfahren nach Anspruch 1, **dadurch gekennzeichnet,** daß man das Abgas durch vor dem Eintritt desselben in einen Wäscher angeordnete Düsen einer Vorbedüsung mit Wasser unterzieht.

3. Verfahren nach Anspruch 1, **dadurch gekennzeichnet,** daß man das Abgas vor dem Eintritt in einen Vorwäscher mit Wasser bedüst.

4. Verfahren nach Anspruch 1, **dadurch gekennzeichnet,** daß man eine Vorbedüsung des Abgases vor dem Eintritt des Abgases in einen vorgeschalteten Wärmetauscher durchführt.

5. Verfahren nach Anspruch 1, **dadurch gekennzeichnet,** daß bei der Vorbedüsung eine Temperaturverringerung des Abgases auf 110 bis 150°C erfolgt.

6. Verfahren nach Anspruch 1, **dadurch gekennzeichnet,** daß bei der Vorbedüsung eine Temperaturverringerung des Abgases auf 120 bis 140°C erfolgt.

## Claims

1. A method of suppressing the formation of sulfuric acid aerosols in exhaust gas purification systems of power plants and incinerator systems, characterized in that the exhaust gas in the exhaust gas purification system is subjected to a prespraying with water such that the temperature does not drop below the dew point of the sulfuric acid in the exhaust gas.

2. A method according to Claim 1, characterized in that the exhaust gas is subjected to a prespraying with water through nozzles arranged upstream from the entrance of the exhaust gas into a scrubber.

3. A method according to Claim 1, characterized in that the exhaust gas is sprayed with water before its entrance into a prescrubber.

4. A method according to Claim 1, characterized in that prespraying of the exhaust gas is performed before the exhaust gas enters an upstream heat exchanger.

5. A method according to Claim 1, characterized in that the temperature of the exhaust gas drops to 110°C to 150°C in prespraying.

6. A method according to Claim 1, characterized in that the temperature of the exhaust gas is reduced to 120°C to 140°C by prespraying.

## Revendications

1. Procédé pour empêcher la formation d'aérosols d'acide sulfurique dans les installations d'épuration des gaz de combustion d'installations d'usine génératrice et de combustion, caractérisé en ce que l'on soumet le gaz de combustion à une prépulvérisation avec de l'eau de sorte que le point de rosée de l'acide sulfurique soit abaissé dans le gaz de combustion.

2. Procédé suivant la revendication 1, caractérisé en ce que l'on soumet le gaz de combustion à une prépulvérisation avec de l'eau par une buse disposée avant l'entrée de celui-ci dans un laveur.

3. Procédé suivant la revendication 1, caractérisé en ce que l'on pulvérise le gaz de combustion avec de l'eau avant l'entré dans un prélaveur.

4. Procédé suivant la revendication 1, caractérisé en ce que l'on réalise une prépulvérisation du gaz de combustion avant l'entrée du gaz de combustion dans un échangeur de chaleur intercalé.

5. Procédé suivant la revendication 1, caractérisé en ce que lors de la prépulvérisation, il se produit un abaissement de la température du gaz de combustion à 110 à 150°C.

6. Procédé suivant la revendication 1, caractérisé en ce que lors de la prépulvérisation, il se produit un abaissement de la température du gaz de combustion à 120 à 140°C.
